# EUROPEAN PATENT SPECIFICATION

(11) **EP 0 620 477 B1**
(45) Date of publication and mention of the grant of the patent: **24.11.1999**
(21) Application number: 94105794.5
(22) Date of filing: 14.04.1994
(51) Int. Cl.: G03B 17/26

(54) **Cartridge loading apparatus and camera**
Kassettenladegerät und Photoapparat
Dispositif de chargement de cassette et caméra

(30) Priority: 15.04.1993 JP 11112693
(43) Date of publication of application: 19.10.1994
(73) Proprietor: CANON KABUSHIKI KAISHA, Tokyo (JP)
(72) Inventor: Honda, Takanori, c/o Canon Kabushiki Kaisha, Tokyo 146 (JP)
(74) Representative: Tiedtke, Harro, Dipl.-Ing.

(56) References cited:
- EP-A- 0 467 644
- US-A- 4 998 123
- US-A- 5 122 820
- PATENT ABSTRACTS OF JAPAN vol. 16, no. 543 (P-1451) 12 November 1992 & JP-A-04 204 839 (MINOLTA CAMERA CO LTD) 27 July 1992 & US-A-5 307 099 (K. KAWAMURA ET AL.) 26 April 1994

## Description

The invention relates to an improvement of a film cartridge loading apparatus for a camera.

Generally, a film cartridge is known such that it is loaded into a camera by feeding film from the cartridge in which the film is completely stored. However, in the camera using a cartridge of this type, it may have been happened that an exposed film cartridge was incorrectly loaded. Therefore, there is also known a camera as disclosed in the U.S. Patent No. 4998123, the camera provides a lock-out mechanism in order to eliminate the above-mentioned problem.

The mechanism includes a lock-out lever which is possible to rotate to a shaft and is biased by a spring in the one side direction. With this kind of the lock-out lever, if an exposed film cartridge is loaded into the camera, the lock-out lever connects with the cartridge to prevent the cartridge loading.

On the other hand, when an unused film cartridge is loaded, the lock-out lever resists such a spring to avoid thereof, whereby the cartridge can be loaded into the camera.

However, in the conventional camera having the mechanism mentioned above, if a user incorrectly loads an exposed or unusable film cartridge into a camera, on the structure of the mechanism, an excessive power may be given onto the lock-out lever and the shaft, thereby requiring a higher rigidity of each component and making the mechanism big.

In US 5 122 820 a blocking member 211 is shown which is urged by a helical compressing spring 215 to pivot clockwise about a support pin 217 until a hook-like end 219 of the blocking member protrudes into the loading chamber.

The camera according to Patent Abstracts of Japan vol. 16, no. 543 (P-1451), 12 November 1992 & JP-A-04 204 839 consist of an accommodating chamber 4 which is to be loaded with a film cartridge 3 and is then accommodated into a camera body 1 by pushing the filled accommodating chamber to the right to come into the chamber 23 of the camera body. The lock-out lever 15 is moved downwardly with the movement of the film cartridge. If the film cartridge is exposed the lower end of the detecting pin 13 of the lock-out lever is located at a position lower than the inner wall 22 of the lower plate 21, the accommodation chamber and, therefore, the film cartridge can not be inserted into the chamber 23 of the camera body. Both, an exposed and, furthermore, an unexposed cartridge according to D2 can be inserted into the chamber until the bottom of the cartridge come into contact with the bottom of the accommodating chamber. Only the movement of the chamber to the right is stopped by the lock-out lever whereby a load is given to the detecting pin 13.

In this connection, document EP 0 467 644 A3 shows a lock-out lever 91 which is rotatably supported by a fixed pin 93, biased by a spring 99 mounted on another pin 97. Furthermore, the lever is limited in rotation by a limiting pin 95 provided in the camera. If an exposed cartridge is loaded, the lever will come into contact with the non-sloped face 23f, whereby the cartridge is inhibited to get loaded.

It is object of the invention to further increase the lifespan of the cartridge loading apparatus without making the mechanism big.

This object is solved with an film cartridge loading apparatus having the characterising features defined in claim 1.

Fig. 1 is a cross-sectional view showing a state of a film cartridge on the way to loading into a film cartridge loading portion of a camera according to a first embodiment of the present invention.

Fig. 2 is a cross-sectional view showing a state of loading completion of an usable or unexposed film cartridge as well.

Fig. 3 is a cross-sectional view showing a state of loading prevention of an unusable or exposed film cartridge as well.

Fig. 4 is a enlarged cross-sectional view showing loading of the usable film cartridge as well.

Fig. 5 is a enlarged cross-sectional view showing loading of the unusable film cartridge as well.

Fig. 6 is a plane view of the usable film cartridge used in the first embodiment of the present invention as it is seen from the bottom side thereof.

Fig. 7 is a plane view of the unusable film cartridge used as well.

Fig. 8 is a cross-sectional view showing a structure of a film cartridge loading portion of a camera according to a second embodiment of the present invention.

Referring to drawings, preferred embodiments according to the present invention will be described hereinbelow.

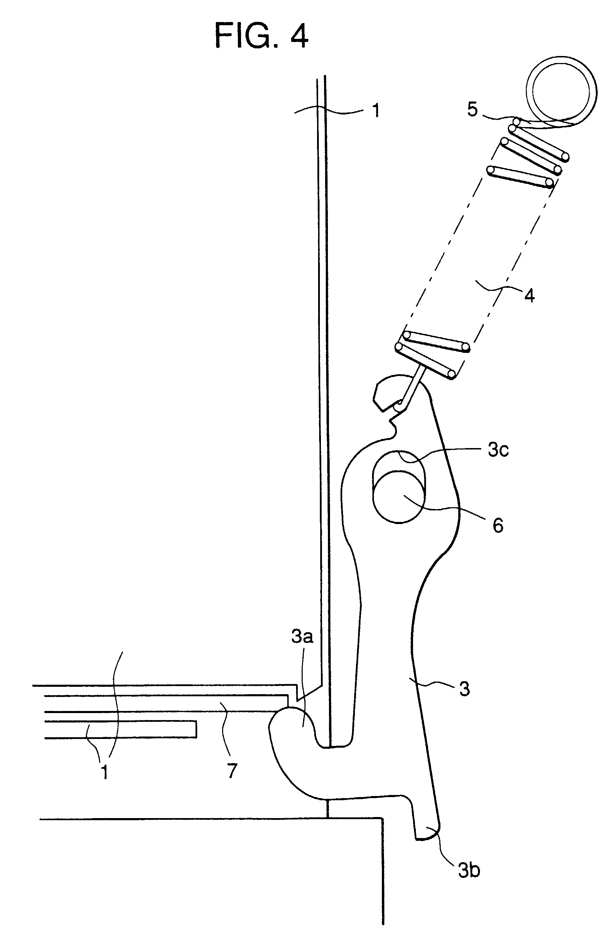

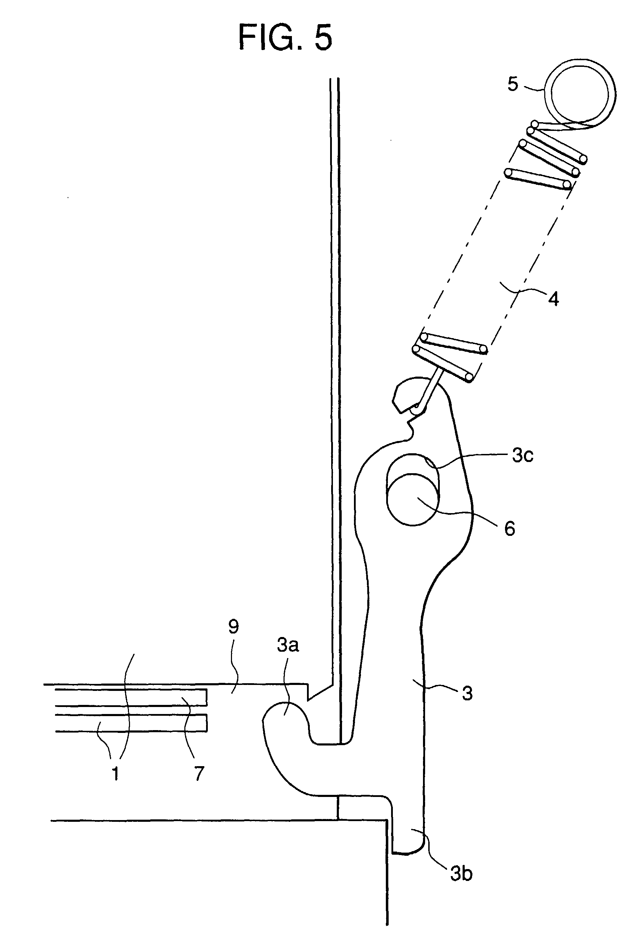

A film cartridge 1 used in the embodiments, as shown in Figs. 4 and 5, includes a disk 7 having a notch part on the periphery thereof, and the disk 7 is attached to an unillustrated rotation shaft of the film cartridge 1. The disk 7 changes a stop position of the rotation thereof, thereby forming either a groove on the bottom side of the film cartridge 1 or a cover thereon.

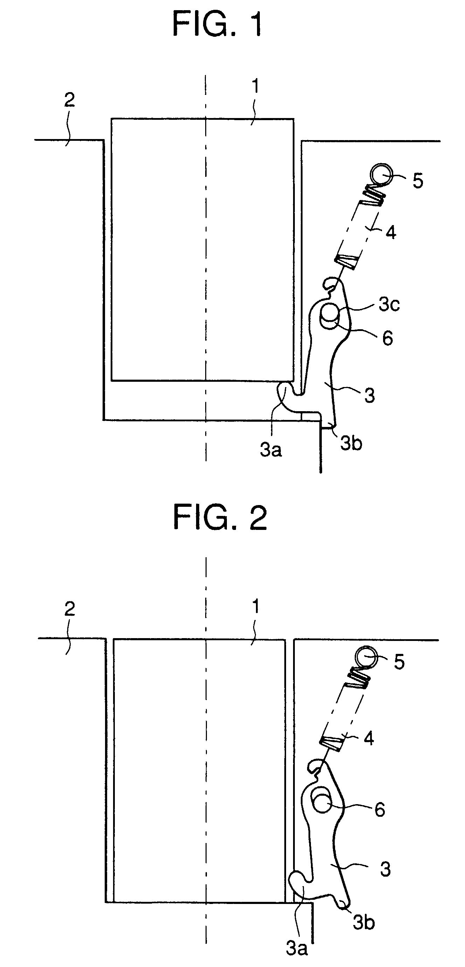

Figs. 1 to 7 show a structure of a film cartridge loading portion according to a first embodiment of the present invention. Referring to Fig. 1, there are provided a film cartridge 1 which completely stores a film therein and thrusts out the film therefrom, a cartridge chamber 2 of a camera body, a lock-out lever or so called determination means 3 for preventing cartridge loading with respect to an exposed or unusable film cartridge, a projection 3a which is put in a groove 9, as shown in Fig. 5, in case of the exposed or unusable film cartridge, a rotating connection-lock part 3b of the lock-out lever 3, an oval hole 3c, a spring 4 for biasing lock-out lever 3 in the one side direction (the upper side from diagonal right-hand), a spring shaft 5 fixed on the body, a lever shaft 6 fixed on the body as rotation axis of the lock-out lever 3, and in Fig. 4, the disk 7 for forming the presence of the lock groove 9, changing the stop position in response to whether the loaded film is unused or exposed.

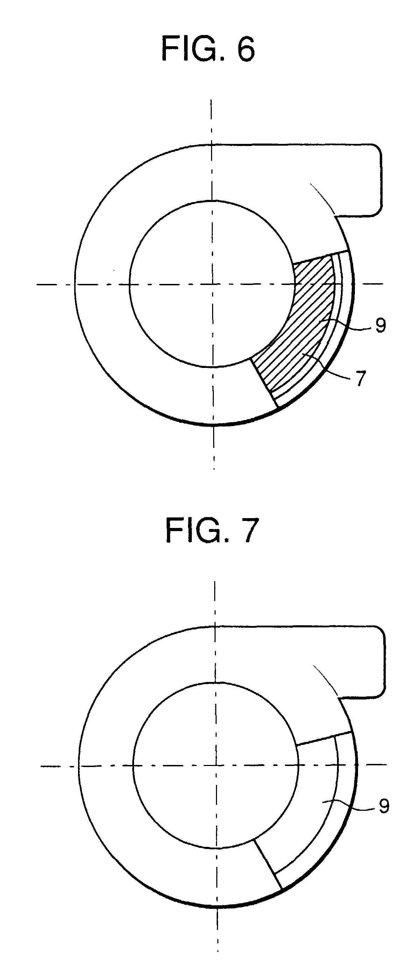

As shown in Fig. 4, when an usable film cartridge is loaded, the disk 7 is positioned not to form the lock groove 9. As shown in Fig. 5, when an unusable film cartridge is loaded, the disk 7 is positioned to form the lock groove 9. Fig. 6 is a plane view of the usable film cartridge as shown in Fig. 4 as it is seen from the bottom side thereof and Fig. 7 is a plane view of the unusable film cartridge as shown in Fig. 5 as well.

Figs. 6 and 7 show whether or not the disk 7 is positioned on the lock groove 9. The position of the disk determines whether or not the projection 3a of the lock-out lever 3 is put in the groove 9.

Next, an actual operation with respect to such a lock-out mechanism will be described. Referring to Fig. 1, when the film cartridge 1 is on the way to loading, that is, when the lock-out lever 3 is in a normal state, the lock-out lever 3 receives clockwise mechanical power from the spring 4. On this state, therefore, the rotating connection-lock part 3b is pressed against the camera body to restrict the rotation.

Next, referring to Fig. 2, when the loaded cartridge is usable, the projection 3a of the lock-out lever 3 contacts with the disk 7 of the film cartridge 1 as shown in Fig. 4 and the lock-out lever 3 rotates counterclockwise around the lever shaft 6. As a result, the film cartridge 1 makes the lock-out lever 3 rotate counterclockwise, whereby the film cartridge 1 is completely loaded in a desired position of the cartridge chamber 2.

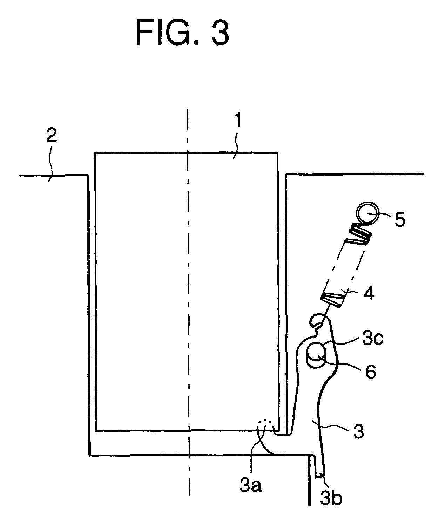

As shown in Fig. 3, when the loaded cartridge 1 is unusable, the projection 3a of the lock-out lever 3 is put in the groove 9 formed by the difference in the stop position of the disk 7 and the rotation of the lock-out lever 3 is restricted. Also, when the loaded cartridge is more deeply pressed, the lock-out lever 3 moves downwardly along the oval hole 3c to strike the bottom side of the cartridge chamber of the camera body (structure member of the camera), thereby preventing the further approach of the unusable cartridge into the cartridge chamber 2, and informing a user that the cartridge being loaded is unusable. That is, the lock-out lever 3 strikes the bottom side of the cartridge chamber of the camera body by the excessive power generated by the loading operation and prevents to move further downwardly, whereby a load given from the oval hole 3c of the lock-out lever 3 to the lever shaft 6 can reduce.

Fig. 4 is an enlarged diagram adjacent to the lock-out lever 3 at the time when the usable film cartridge is loaded. Referring to Fig. 4, the disk 7 of the film cartridge 1 covers the groove therewith to prevent to put the projection 3a of the lock-out lever 3 in the groove. Therefore, by the loaded usable film cartridge, the lock-out lever 3 resists the spring 4 to rotate counterclockwise around the lever shaft 6.

Fig. 5 is an enlarged diagram adjacent to the lock-out lever 3 when the unusable film cartridge is loaded. Referring to Fig. 5, a notch part 9 provided on the disk 7 of the film cartridge 1 forms the groove to put the projection 3a of the lock-out lever 3 therein.

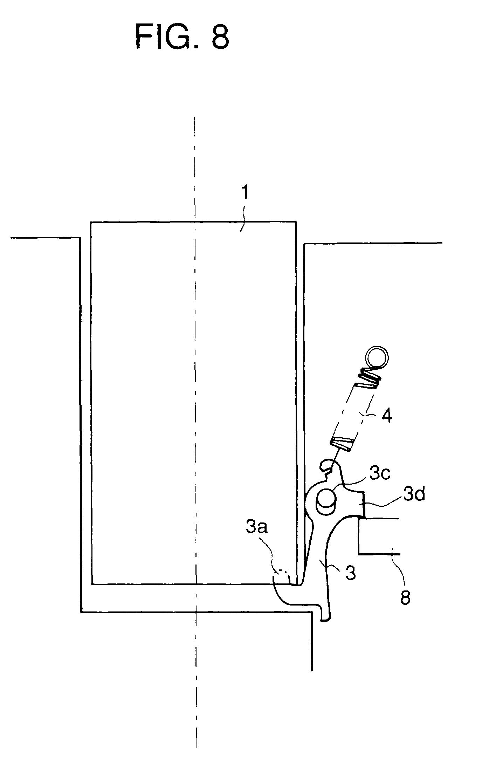

Fig. 8 is a diagram showing a structure of a film cartridge loading portion of a camera according to a second embodiment of the present invention. In Fig. 8, elements of which are identical to those shown in the first embodiment adopt the same numerals to omit a description thereof. In the drawing, there are provided a connection-lock part 3d for preventing downward movement of the lock-out lever 3 and a projection 8 of the camera body.

In the above each of embodiments, as a method for inhibiting the loading of the unusable cartridge, the invention is not limited to the shape of the lock-out lever 3. The present invention can be applied, also to another shape of lock-out lever, for example a slide cam.

Further, in case the unusable cartridge is loaded, as a member with which the lock-out lever 3 contacts and a movement of which is inhibited, a member except the structure member of the camera of the above embodiments can be included in the present invention.

In this embodiment, the different point from the first embodiment is that, when the unusable film cartridge is loaded, the projection 3a of the lock-out lever 3 is put in the groove to move lock-out lever 3 downwardly along the oval hole 3c, and on this moment, the connection-lock part 3d strikes the projection 8 of the body to prevent downward movement of the lock-out lever 3. Also, the other things are the same as those shown in the first embodiment.

Furthermore, according to the present invention, there can be applied various types of cartridge except the cartridge shown in the embodiments, cartridges including image recording mediums but film and also, the other cartridges and loading materials except cartridge.

Furthermore, according to the present invention, there can be applied a single-lens reflex camera, a lens-shutter camera, a video camera and also, a optical apparatus except camera and other apparatus.

Furthermore, according to the present invention, it is to be understood that the loading direction of the cartridge is not limited to the direction of the above-mentioned embodiments.

While the present invention has been described with respect to what is presently considered to be the preferred embodiments, it is to be understood that the invention is not limited to the disclosed embodiments. To the contrary, the invention is intended to cover various modifications and equivalent arrangement included within the scope of the appended claims.

## Claims

1. A film cartridge loading apparatus for loading film cartridges having a mechanical indicator means indicating whether the film is exposed or unexposed comprising:
determination means (3) including means (3a) which upon loading the cartridge engage with the cartridge indicator means for determining whether the cartridge (1) is exposed;
supporting means (6) for supporting said determination means (3) and enabling movement of the latter;
the apparatus being **characterized in that,**
the determination means (3) includes means (3c) which upon the loading of the cartridge allows the determination means to vary its state in accordance with whether the cartridge (1) is exposed so as to move together with the cartridge, and in that the apparatus (2, 8) and the determination means (3c, 3b, 3d) are adapted to inhibit the loading of the exposed cartridge (1) by preventing the further movement of said determination means (3) while preventing said determination means (3) from exerting a force on said supporting means (6).

2. An apparatus according to claim 1, wherein said supporting means (6) includes means for rotatably supporting said determination means (3).

3. An apparatus according to claim 1, wherein said suppcrting means (6) includes means (3c) for slidably supporting said determination means (3).

4. An apparatus according to claim 1, 2 and 3 further comprising means (4) for urging said supporting means (6) in a predetermined direction.

5. An apparatus according to claim 1, wherein said prevention means includes a structure member of a camera.

6. A camera comprising a cartridge loading apparatus according to any one of the preceding claims 1 to 5.

## Patentansprüche

1. Filmkartuschenladegerät zum Laden von Filmkartuschen mit einer mechanische Anzeigeeinrichtung, die anzeigt, ob der Film belichtet ist oder nicht belichtet ist, mit:
einer Erfassungseinrichtung (3), die eine Einrichtung (3a) umfaßt, die beim Laden der Kartusche mit der Kartuschenanzeigeeinrichtung in Eingriff gelangt, um zu erfassen, ob die Kartusche (1) belichtet ist,
einer Stützeinrichtung (6) zum Stützen der Erfassungseinrichtung (3) und zum Ermöglichen einer Bewegung der letztgenannten,
**dadurch gekennzeichnet, daß**
die Erfassungseinrichtung (3) eine Einrichtung (3c) umfaßt, die beim Laden der Kartusche ermöglicht, daß die Erfassungseinrichtung ihren Zustand in Übereinstimmung dazu ändert, ob die Kartusche (1) belichtet ist, um sich so zusammen mit der Kartusche zu bewegen, und das Gerät (2, 8) und die Erfassungseinrichtung (3c, 3b, 3d) daran angepaßt sind, daß sie das Laden der belichteten Kartusche (1) verhindern, indem die weitere Bewegung der Erfassungseinrichtung (3) verhindert wird, während verhindert wird, daß die Erfassungseinrichtung (3) eine Kraft auf die Stützeinrichtung (6) ausübt.

2. Gerät gemäß Anspruch 1, wobei
die Stützeinrichtung (6) eine Einrichtung für ein drehbares Stützen der Erfassungseinrichtung (3) umfaßt.

3. Gerät gemäß Anspruch 1, wobei
die Stützeinrichtung (6) eine Einrichtung (3c) für ein gleitfähiges Stützen der Erfassungseinrichtung (3) umfaßt.

4. Gerät gemäß Anspruch 1, 2 und 3, das des weiteren eine Einrichtung (4) zum Drängen der Stützeinrichtung (6) in eine vorbestimmte Richtung aufweist.

5. Gerät gemäß Anspruch 1, wobei
die Verhinderungseinrichtung ein Aufbauelement einer Kamera umfaßt.

6. Kamera mit einem Kartuschenladegerät gemäß einem der vorherigen Ansprüche 1 bis 5.

## Revendications

1. Dispositif de chargement de cassette de film pour charger des cassettes de film ayant des moyens d'indication mécaniques indiquant si le film est exposé ou non-exposé, comportant :
des moyens de détermination (3) comportant des moyens (3a) qui lors du chargement de la cassette entrent en contact avec l'indicateur de cassette pour déterminer si la cassette (1) est exposée,
des moyens de support (6) pour supporter lesdits moyens de détermination (3) et permettre le mouvement de ces derniers; le dispositif étant caractérisé en ce que,
les moyens de détermination (3) comportent des moyens (3c) qui lors du chargement de la cassette permettent aux moyens de détermination de faire varier leur état selon que la cassette (1) est exposée afin de les déplacer en même temps que la cassette, et en ce que le dispositif (2, 8) et les moyens de détermination (3c, 3b, 3d) sont adaptés pour inhiber le chargement de la cassette exposée (1) en empêchant le mouvement ultérieur desdits moyens de détermination (3) tout en empêchant que lesdits moyens de détermination (3) exercent une force sur lesdits moyens de support (6).

2. Dispositif selon la revendication 1, dans lequel lesdits moyens de support (6) comportent des moyens pour supporter de manière rotative lesdits moyens de détermination (3).

3. Dispositif selon la revendication 1, dans lequel lesdits moyens de support (6) comportent des moyens (3c) pour supporter de manière coulissante lesdits moyens de détermination (3).

4. Dispositif selon les revendications 1, 2 et 3 comportant de plus des moyens (4) pour pousser lesdits moyens de support (6) dans une direction prédéterminée.

5. Dispositif selon la revendication 1, dans lequel leschits moyens d'empêcherment comportent des éléments de structure d'une caméra.

6. Caméra contenant un dispositif de chergement de cassette selon une des revendication précédentes 1 à 5.
